# EUROPÄISCHE PATENTSCHRIFT

(11) **EP 2 245 492 B1**
(45) Veröffentlichungstag und Bekanntmachung des Hinweises auf die Patenterteilung: **02.01.2019**
(21) Anmeldenummer: 09712183.4
(22) Anmeldetag: 11.02.2009
(51) Int. Cl.: G02B 6/44, H02G 15/013, H02G 15/113

(54) **KABELGROMMET**
CABLE GROMMET
JOINT POUR PRESSE ETOUPE

(30) Priorität: 21.02.2008 DE 202008002464 U
(43) Veröffentlichungstag der Anmeldung: 03.11.2010
(73) Patentinhaber: Corning Optical Communications LLC, Hickory, NC 28601 (US)
(72) Erfinder: MÜLLER, Thorsten, 58708 Menden (DE); EICHSTÄDT, Andreas, 58675 Hemer (DE)
(74) Vertreter: Sturm, Christoph
(86) Internationale Anmeldenummer: PCT/EP2009/000930
(87) Internationale Veröffentlichungsnummer: WO 2009/103443

(56) Entgegenhaltungen:
- CH-A- 415 765
- DE-A1- 3 347 885
- DE-U- 1 972 078
- FR-A1- 2 856 203
- JP-A- 2000 287 338
- JP-A- 2005 107 244
- US-A- 4 037 142

## Beschreibung

Die Erfindung betrifft ein Datenkabelgrommet nach dem Oberbegriff des Anspruchs 1. Des Weiteren betrifft die Erfindung eine Kabelmuffe nach dem Oberbegriff des Anspruchs 7.

Kabelmuffen zur strukturierten Ablage bzw. Handhabung von in Lichtwellenleiterkabeln geführten Lichtwellenleitern werden in Lichtwellenleiterkabelnetzen zum Schutz von Spleißverbindungen an Verbindungsstellen von zwei Lichtwellenleiterkabeln sowie zum Schutz der Lichtwellenleiter an Abzweigstellen oder an Aufteilungsstellen von Lichtwellenleiterkabeln verwendet. Dabei müssen die Kabelmuffen die Kontinuität der Lichtwellenleiterkabel so gewährleisten, als wären die Lichtwellenleiterkabel nicht unterbrochen. Der strukturierten Ablage und schonenden Handhabung der Lichtwellenleiter kommt hierbei eine entscheidenden Rolle zu, damit die Übertragungseigenschaften der Lichtwellenleiter nicht negativ beeinträchtigt werden.

Aus der DE 20 2006 006 019 U1 und der DE 20 2007 003 989 U1 sind jeweils Dichtungskörper einer Kabelmuffe bekannt, die ein mittleres, zylinderartiges Dichtungskörpersegment sowie mehrere zylindersegmentartige Dichtungskörpersegmente umfassen, wobei jedes zylindersegmentartige Dichtungskörpersegment in eine Ausnehmung des mittleren, zylinderartigen Dichtungskörpersegments einführbar ist. Jedes in eine Ausnehmung des mittleren Dichtungskörpersegments einführbare zylindersegmentartige Dichtungskörpersegment verfügt über ein gelartiges Dichtungselement, welches mit Hilfe eines Druckelements komprimierbar ist. Jedes zylindersegmentartige Dichtungskörpersegment definiert zusammen mit dem mittleren, zylinderartigen Dichtungskörpersegment eine Kabeleinführung des Dichtungskörpers der Kabelmuffe.

Bei den aus der DE 20 2006 006 019 U1 und DE 20 2007 003 989 U1 bekannten Kabelmuffen ist über jede Kabeleinführung ein einziges Kabel in einen Innenraum der Kabelmuffe einführbar.

Dann, wenn über eine Kabeleinführung eines Dichtungskörpers einer Kabelmuffe mehrere Kabel in den Innenraum der Kabelmuffe eingeführt werden sollen, kommen im Bereich der entsprechenden Kabeleinführung sogenannte Kabelgrommets zum Einsatz, wie sie z. B. aus der US 7,038,137 B2 bekannt sind. So offenbart dieser Stand der Technik Kabelgrommets, die einen Grundkörper aus einem elastischen Material aufweisen, wobei in den Grundkörper mehrere sich in Längsrichtung desselben erstreckende Ausnehmungen zur Aufnahme und Abdichtung jeweils eines Kabels eingebracht sind. Dabei können nach der US 7,038,137 B2 in eine Mantelfläche des Grundkörpers Schlitze eingebracht sein, die in jeweils eine Ausnehmung münden, um so die Kabel über die Schlitze in die Ausnehmungen einzuführen. In diesem Fall wird dann nach dem Einführen der Kabel in die Ausnehmungen des Kabelgrommets ein Dichtband um dasselbe gewickelt.

Aus der DE 33 47 885 A1 ist ein Datenbkabelgrommet nach dem Oberbegriff des Anspruchs 1 bekannt. CH 415 765 A, US 4 037 142 A, FR 2 856 203 A1, DE 19 72 078 U und JP 2000-287338 A offenbaren weiteren Stand der Technik. Hiervon ausgehend liegt der vorliegenden Erfindung das Problem zu Grunde, ein neuartiges Datenkabelgrommet sowie eine neuartige Kabelmuffe zu schaffen.

Dieses Problem wird gemäß der Erfindung durch ein Datenkabelgrommet gemäß Anspruch 1 gelöst.

Beim Kabelgrommet ist es möglich, Kabel unterschiedlicher Außendurchmesser mit ein und demselben Kabelgrommet effektiv abzudichten, wobei zur Abdichtung nur ein geringer Kraftaufwand und ein kurzer Verpressweg erforderlich ist, um eine gute Dichtwirkung zu gewährleisten.

Eine Kabelmuffe mit einem Kabelgrommet nach der Erfindung ist im Anspruch 7 definiert. Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigen:
- Fig. 1:: ein erfindungsgemäßes Kabelgrommet nach einem ersten Ausführungsbeispiel der Erfindung in perspektivischer Ansicht;
- Fig. 2:: das Kabelgrommet der Fig. 1 in Vorderansicht;
- Fig. 3:: das Kabelgrommet der Fig. 1 zusammen mit einem Dichtungskörpersegment eines Dichtungskörpers einer Kabelmuffe;
- Fig. 4:: ein Kabelgrommet nach dem Stand der Technikin in perspektivischer Ansicht;
- Fig. 5:: das Kabelgrommet der Fig. 3 zusammen mit einem Dichtungskörpersegment eines Dichtungskörpers einer Kabelmuffe.

Die hier vorliegende Erfindung betrifft Kabelgrommets für Datenkabel, wobei mit einem Kabelgrommet mehrere Datenkabel in einer Kabeleinführung eines Dichtungskörpers einer Kabelmuffe abgedichtet werden können. Die erfindungsgemäßen Kabelgrommets finden vorzugsweise bei Kabelmuffen Verwendung, wie sie z. B. aus der DE 20 2006 006 019 U1 sowie der DE 20 2007 003 989 U1 bekannt sind.

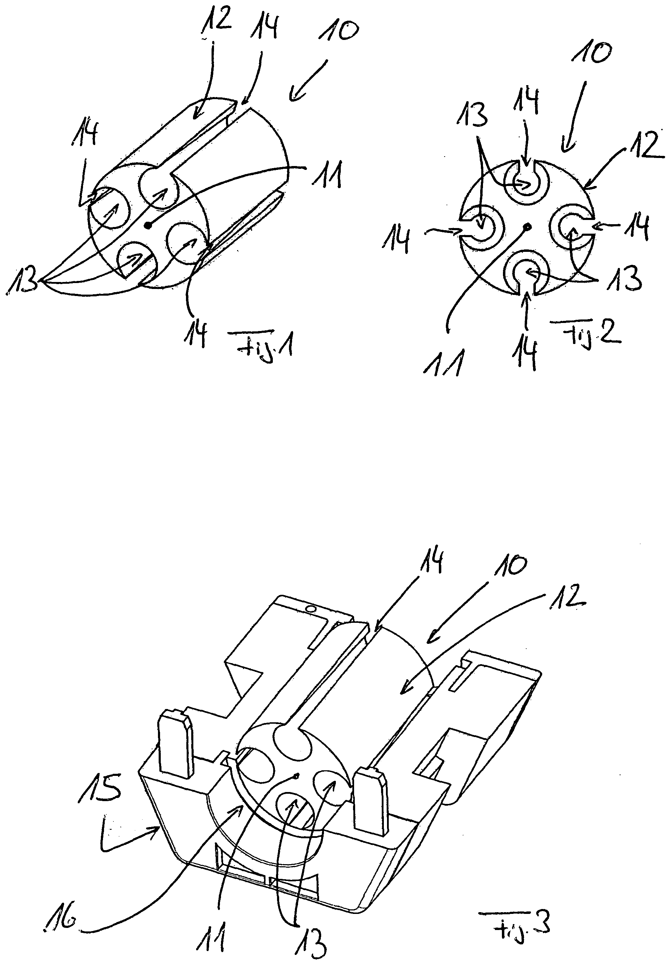

Fig. 1 und 2 zeigen unterschiedliche Ansichten eines erfindungsgemäßen Kabelgrommets 10 nach einem ersten Ausführungsbeispiel der Erfindung, wobei das Kabelgrommet 10 der Fig. 1 und 2 einen Grundkörper 11 aufweist, der aus einem elastischen Material gebildet ist, und eine zylindrisch konturierte Mantelfläche 12 aufweist.

Im Ausführungsbeispiel der Fig. 1 und 2 sind in den Grundkörper 11 insgesamt vier Ausnehmungen 13 eingebracht, die sich in Längsrichtung des Grundkörpers 11 erstrecken, wobei in jeder der Ausnehmungen 13 ein Datenkabel aufgenommen und abgedichtet werden kann.

Gemäß Fig. 1 und 2 sind in die Mantelfläche 12 des Grundkörpers 11 Schlitze 14 eingebracht, die sich in Längsrichtung des Grundkörpers 11 erstrecken, wobei jeder Schlitz 14 in jeweils eine der Ausnehmungen 13 mündet, sodass Datenkabel über die Schlitze 14 in die Ausnehmungen 13 eingeführt werden können.

Beim Kabelgrommet 10 der Fig. 1 und 2 sind die Ausnehmungen 13 in Längsrichtung derselben und damit in Längsrichtung des Grundkörpers 12 gesehen konisch konturiert, nämlich derart, dass sich ein Innendurchmesser der Ausnehmungen 13 in Längsrichtung derselben und damit in Längsrichtung des Grundkörpers 12 verjüngt bzw. verringert. Vorzugsweise sind die Ausnehmungen 13 über die gesamte Länge derselben konisch konturiert, und zwar derart, dass sich der Innendurchmesser der Ausnehmungen 13 in Längsrichtung derselben gesehen kontinuierlich verjüngt bzw. verringert. Dabei ist zumindest abschnittsweise der Innendurchmesser der Ausnehmungen 17 kleiner als ein Außendurchmesser der in denselben abzudichtenden Kabel.

Fig. 3 zeigt das Kabelgrommet der Fig. 1 und 2 zusammen mit einem Zylindersegmentartigen Dichtungskörpersegment 15 eines Dichtungskörpers einer Kabelmuffe, der zusammen mit einem nicht dargestellten mittleren Dichtungskörpersegment eine Kabeleinführung 16 des Dichtungskörpers definieret. Das Kabelgrommet 10 ist dabei in diese Kabeleinführung 16 einsetzbar, sodass über die Kabeleinführung 16 gleichzeitig mehrere Kabel in die Kabelmuffe eingeführt und im Bereich der Kabeleinführung 16 abgedichtet werden können. Bei dem Dichtungskörpersegment 15 der Fig. 3 handelt es sich vorzugsweise um ein Dichtungskörpersegment der Kabelmuffe gemäß DE 20 2006 006 019 U1.

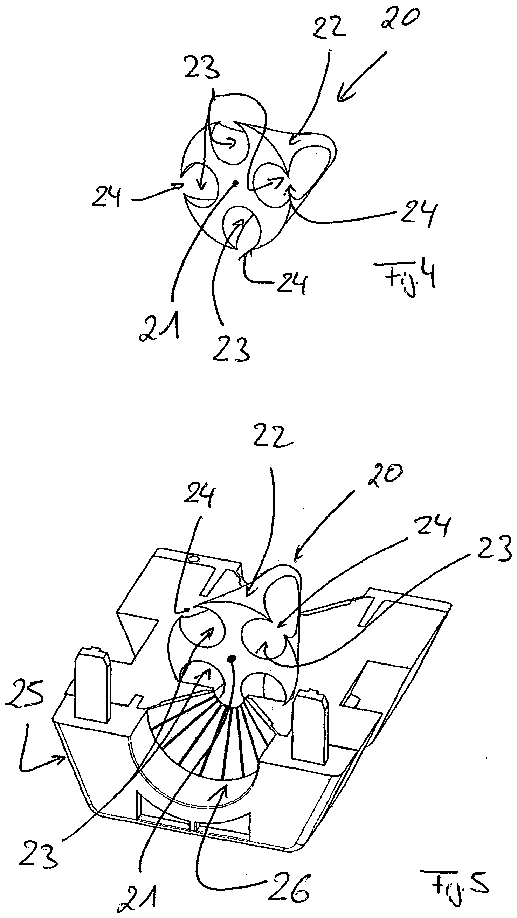

Ein weiteres Kabelgrommet 20 zeigt Fig. 4, wobei das Kabelgrommet 20 der Fig. 4 wiederum einen Grundkörper 21 aus einem elastischen Werkstoff aufweist. In den Grundkörper 21 aus dem elastischen Werkstoff sind wiederum mehrerer sich in Längsrichtung desselben erstreckende Ausnehmungen 23 eingebracht, wobei in jeder der Ausnehmungen 23 ein Kabel aufgenommen und abgedichtet werden kann.

Im Beispiel der Fig. 4 und 5 ist eine Mantelfläche 22 des Grundkörpers 21 des Kabelgrommets 20 in Längsrichtung des Grundkörpers 20 gesehen konisch konturiert. Die in den Grundkörper 21 eingebrachten Ausnehmungen 23 sind in Längsrichtung derselben gesehen ebenfalls konisch konturiert sein.

In die Mantelfläche 22 sind wiederum Schlitze 24 eingebracht, wobei jeder Schlitz 24 in eine Ausnehmung 23 mündet, sodass Datenkabel über die Schlitze 24 in die Ausnehmungen 23 eingeführt werden können. Fig. 5 zeigt das Kabelgrommet 20 der Fig. 4 zusammen mit einem Dichtungskörpersegment 25 eines Dichtungskörpers einer Kabelmuffe, wobei das Kabelgrommet 20 in eine vom Dichtungskörpersegment 25 ausgebildete Kabeleinführung 26 eingesetzt ist. Beim Dichtungskörpersegment 25 der Fig. 5 handelt es sich vorzugsweise um ein Dichtungskörpersegment für einen Dichtungskörper gemäß DE 20 2007 003 989 U1.

Mit Hilfe der erfindungsgemäßen Kabelgrommets können in einer Kabeleinführung eines Dichtungskörpers einer Kabelmuffe gleichzeitig mehrere Kabel, und zwar auch Kabel mit unterschiedlichen Außendurchmessern, effektiv abgedichtet werden. Zu dieser Abdichtung ist zur ein geringer Kraftaufwand und ein kurzer Verpressweg erforderlich. Abzudichtende Kabel können einfach in das jeweilige Kabelgrommet eingeführt werden. Die Mantelfläche des Grundkörpers des Kabelgrommets ist vorzugsweise derart konturiert, dass die Kontur derselben an eine Kontur des Kabeleinführungsbereichs der Kabelmuffe angepasst ist, nämlich an die Kontur einer Ausnehmung, die in einen der Kabeleinführung zugeordneten Dichtkörper eingebracht ist.

### Bezugszeichenliste

- 10: Kabelgrommet
- 11: Grundkörper
- 12: Mantelfläche
- 13: Ausnehmung
- 14: Schlitz
- 15: Dichtungskörpersegment
- 16: Kabeleinführung

- 20: Kabelgrommet
- 21: Grundkörper
- 22: Mantelfläche
- 23: Ausnehmung
- 24: Schlitz
- 25: Dichtungskörpersegment
- 26: Kabeleinführung

## Patentansprüche

1. Datenkabelgrommet, insbesondere Lichtwellenleiterkabelgrommet, mit einem Grundkörper aus einem elastischem Material, wobei in den Grundkörper mehrere sich in Längsrichtung desselben erstreckende Ausnehmungen zur Aufnahme und Abdichtung jeweils eines Datenkabels eingebracht sind, wobei in eine Mantelfläche (12, 22) des Grundköpers (11, 21) sich in Längsrichtung desselben erstreckende Schlitze (14, 24) eingebracht sind, und wobei jeder der Schlitze (14, 24) in jeweils eine der Ausnehmungen (13, 23) mündet, sodass die Datenkabel über die Schlitze (14, 24) in radialer Richtung des Grundkörpers in die Ausnehmungen (13, 23) einbringbar sind, **dadurch gekennzeichnet, dass** die Ausnehmungen (13, 23) in Längsrichtung derselben gesehen zumindest abschnittweise konisch konturiert sind.

2. Datenkabelgrommet nach Anspruch 1, **dadurch gekennzeichnet, dass** die Ausnehmung (13, 23) derart konisch konturiert ist, dass sich ein Innendurchmesser der Ausnehmungen in Längsrichtung derselben gesehen verjüngt bzw. verringert.

3. Datenkabelgrommet nach Anspruch 2, **dadurch gekennzeichnet, dass** sich der Innendurchmesser der Ausnehmungen (13, 23) in Längsrichtung derselben gesehen kontinuierlich verjüngt bzw. verringert.

4. Datenkabelgrommet nach Anspruch 2 oder 3, **dadurch gekennzeichnet, dass** der Innendurchmesser der Ausnehmung (13, 23) zumindest abschnittsweise kleiner als ein Außendurchmesser eines abzudichtenden Datenkabels ist.

5. Datenkabelgrommet nach einem der Ansprüche 1 bis 5, **dadurch gekennzeichnet, dass** eine Mantelfläche (12) des Grundköpers (11) zylindrisch konturiert ist.

6. Datenkabelgrommet nach einem der Ansprüche 1 bis 5, **dadurch gekennzeichnet, dass** eine Mantelfläche (22) des Grundköpers (21) konisch konturiert ist.

7. Kabelmuffe zur strukturierten Ablage bzw. Handhabung von in Datenkabeln geführten Datenleitern, insbesondere Lichtwellenleitern, mit einem Abdeckkörper und mindestes einem Dichtungskörper, wobei der Abdeckkörper und der oder jeder Dichtungskörper einen Innenraum zur Ablage bzw. Handhabung der Datenleiter umschließen, wobei der oder jeder Dichtungskörper mindestens eine Kabeleinführung aufweist, wobei über die oder jede Kabeleinführung des jeweiligen Dichtungskörpers jeweils mindestens ein Kabel in den Innenraum der Kabelmuffe einführbar ist, und wobei mindestens einer Kabeleinführung ein Datenkabelgrommet zugeordnet ist, um über die jeweilige Kabeleinführung mehrere Datenkabeln in den Innenraum der Kabelmuffe einzuführen, **dadurch gekennzeichnet, dass** das oder jedes Datenkabelgrommet (10, 20) nach einem oder mehreren der Ansprüche 1 bis 6 ausgebildet ist.

## Claims

1. Data cable grommet, in particular optical waveguide cable grommet, comprising a main body composed of an elastic material, wherein a plurality of recesses for receiving and sealing off in each case one data cable are made in the main body, the said recesses extending in the longitudinal direction of the said main body, wherein slots (14, 24) are made in a lateral surface (12, 22) of the main body (11, 21), the said slots extending in the longitudinal direction of the said main body, and wherein each of the slots (14, 24) issues into in each case one of the recesses (13, 23), so that the data cables can be inserted into the recesses (13, 23) via the slots (14, 24) in the radial direction of the main body, **characterized in that** the recesses (13, 23) are conically contoured at least in sections, as seen in the longitudinal direction of the said recesses.

2. Data cable grommet according to Claim 1, **characterized in that** the recess (13, 23) is conically contoured in such a way that an inside diameter of the recesses tapers or decreases as seen in the longitudinal direction of the said recesses.

3. Data cable grommet according to Claim 2, **characterized in that** the inside diameter of the recesses (13, 23) tapers or decreases continuously as seen in the longitudinal direction of the said recesses.

4. Data cable grommet according to Claim 2 or 3, **characterized in that** the inside diameter of the recess (13, 23), at least in sections, is smaller than an outside diameter of a data cable to be sealed off.

5. Data cable grommet according to one of Claims 1 to 5, **characterized in that** a lateral surface (12) of the main body (11) is cylindrically contoured.

6. Data cable grommet according to one of Claims 1 to 5, **characterized in that** a lateral surface (22) of the main body (21) is conically contoured.

7. Cable sleeve for structured laying or handling of data conductors, in particular optical waveguides, which are guided in data cables, comprising a covering body and at least one sealing body, wherein the covering body and the or each sealing body enclose an interior space for laying or handling the data conductors, wherein the or each sealing body has at least one cable inlet, wherein in each case at least one cable can be inserted into the interior of the cable sleeve via the or each cable inlet of the respective sealing body, and wherein a data cable grommet is associated with at least one cable inlet in order to introduce a plurality of data cables into the interior space of the cable sleeve via the respective cable inlet, **characterized in that** the or each data cable grommet (10, 20) is designed according to one or more of Claims 1 to 6.

## Revendications

1. Passe-câble pour câble de données, en particulier passe-câble pour guide d'onde optique, comprenant un corps de base constitué d'un matériau élastique, plusieurs évidements s'étendant dans la direction longitudinale du corps de base étant introduits dans celui-ci pour recevoir et étanchéifier à chaque fois un câble de données, des fentes (14, 24) s'étendant dans la direction longitudinale du corps de base (11, 21) étant pratiquées dans une surface d'enveloppe (12, 22) de ce dernier, et chacune des fentes (14, 24) débouchant respectivement dans l'un des évidements (13, 23), de telle sorte que les câbles de données puissent être introduits dans les évidements (13, 23) par le biais des fentes (14, 24) dans la direction radiale du corps de base, **caractérisé en ce que** les évidements (13, 23) présentent au moins en partie un contour conique, vu dans leur direction longitudinale.

2. Passe-câble pour câble de données selon la revendication 1, **caractérisé en ce que** l'évidement (13, 23) présente un contour conique de telle sorte qu'un diamètre intérieur des évidements se rétrécisse ou diminue, vu dans leur direction longitudinale.

3. Passe-câble pour câble de données selon la revendication 2, **caractérisé en ce que** le diamètre intérieur des évidements (13, 23) se rétrécit ou diminue de manière continue, vu dans la direction longitudinale.

4. Passe-câble pour câble de données selon la revendication 2 ou 3, **caractérisé en ce que** le diamètre intérieur des évidements (13, 23) est au moins en partie inférieur à un diamètre extérieur d'un câble de données à étanchéifier.

5. Passe-câble pour câble de données selon l'une quelconque des revendications 1 à 5, **caractérisé en ce qu'**une surface d'enveloppe (12) du corps de base (11) présente un contour cylindrique.

6. Passe-câble pour câble de données selon l'une quelconque des revendications 1 à 5, **caractérisé en ce qu'**une surface d'enveloppe (22) du corps de base (21) présente un contour conique.

7. Manchon de câble pour une pose ou une manipulation structurée de conducteurs de données guidés dans des câbles de données, en particulier des guides d'ondes optiques, comprenant un corps de recouvrement et au moins un corps d'étanchéité, le corps de recouvrement et le ou chaque corps d'étanchéité entourant un espace interne pour la pose ou la manipulation des conducteurs de données, le ou chaque corps d'étanchéité présentant au moins une introduction de câble, à chaque fois au moins un câble pouvant être introduit dans l'espace interne du manchon de câble par le biais de la ou de chaque introduction de câble du corps d'étanchéité respectif et un passe-câble pour câble de données étant associé à au moins une introduction de câble afin d'introduire plusieurs câbles de données dans l'espace interne du manchon de câble par le biais de l'introduction de câble respective, **caractérisé en ce que** le ou chaque passe-câble pour câble de données (10, 20) est réalisé selon l'une quelconque ou plusieurs des revendications 1 à 6.
